(19) Europäisches Patentamt
European Patent Office
Office européen des brevets

(11) **EP 3 395 883 A1**

(12) **EUROPEAN PATENT APPLICATION**
published in accordance with Art. 153(4) EPC

(43) Date of publication:
**31.10.2018 Bulletin 2018/44**

(21) Application number: **16878986.5**

(22) Date of filing: **22.12.2016**

(51) Int Cl.:
**C08L 23/10** (2006.01)    **C08L 23/14** (2006.01)

(86) International application number:
**PCT/JP2016/088517**

(87) International publication number:
**WO 2017/111100 (29.06.2017 Gazette 2017/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **22.12.2015 JP 2015250491**

(71) Applicant: **Kaneka Corporation**
**Osaka-shi, Osaka 530-8288 (JP)**

(72) Inventors:
• **MATSUMOTO, Takashi**
 **Osaka 566-0072 (JP)**
• **KANEDA, Yutaka**
 **Osaka 566-0072 (JP)**
• **YONEDA, Yoshimi**
 **Osaka 566-0072 (JP)**
• **AMANO, Masaki**
 **Osaka 566-0072 (JP)**

(74) Representative: **Vossius & Partner**
**Patentanwälte Rechtsanwälte mbB**
**Siebertstrasse 3**
**81675 München (DE)**

(54) **INJECTION MOLDED BODY OF POLYPROPYLENE RESIN COMPOSITION**

(57)    Provided is an injection molded body of a polypropylene resin composition, which has excellent fluidity and burr prevention performance. The polypropylene resin composition contains a conjugated diene-modified polypropylene resin (A) that has a melt flow rate of 1-150 g/10 min as measured at 230°C under a load of 2.16 kg and a polypropylene resin (B) that has a melt flow rate of 7-100 g/10 min as measured at 230°C under a load of 2.16 kg. Relative to 100 parts by weight of the total of the components (A) and (B), the content of the component (A) is 0.1-50 parts by weight and the content of the component (B) is 99.9-50 parts by weight. The polypropylene resin composition has a melt flow rate of 10-80 g/10 min as measured under the above- described conditions, while having a melt tension of 0.7-30 gf as measured at 200°C at 10 m/min.

**Description**

**Technical Field**

The present invention relates to an injection molded body of a polypropylene resin composition.

**Background Art**

A polypropylene resin has good physical properties and moldability, and its use range has been expanding rapidly as an environmentally friendly material. Particularly, in automobile parts and the like, polypropylene resin products that are light in weight and excellent in rigidity are provided. One such product is an injection molded body of a polypropylene resin.

In the injection molding materials, from the viewpoint of productivity, higher fluidity is required, and in many cases, such requirement is dealt with by changing prescription or changing molding conditions.

When making the injection molding material to have a high fluidity by changing the prescription, the material intrudes into the gaps of the mold splitting surface, and burrs are likely to occur in the molded product. Since it is common to increase the material injection pressure or to increase the injection speed when dealing with changes in the molding conditions, a gap is generated on the mold splitting surface due to the injection pressure, and burrs are likely to occur in the molded product. Such a tendency becomes prominent in the case of a large injection molded body, for example, an injection molded body for automobiles. For this reason, there is a demand for injection molding materials with little generation of burrs, in which burrs are practically absent or negligible, so that deburring work after injection molding is unnecessary or simplified.

As such a material, for example, in a propylene resin composition containing a propylene resin, an elastomer, and an inorganic filler, or a propylene resin and an inorganic filler as main components, respectively, there has been proposed a propylene resin composition in which characteristics of the propylene resin satisfy one or both of a specific infrared absorbance ratio and a specific Mw/Mn ratio and in which a characteristic value of the resin composition is within a range satisfying a specified inequality (Patent Literature 1). Specifically, ethylene-α-olefin copolymers and styrene thermoplastic elastomers are proposed as elastomers, and talc has been proposed as an inorganic filler. However, there were problems as follows: since compatibility between the propylene type resin and the elastomer is low, deterioration of physical properties and poor appearance may occur; there is a statement on the effect only when the elastomer is blended in an amount of 25% by weight or more (Example 4) and for example, in the case where the amount of the elastomer is 20% by weight (Comparative Example 2), no burr prevention effect is recognized; and in addition, when an inorganic filler such as talc cannot be blended, such a propylene resin composition cannot be applied.

Further, there has been proposed a polypropylene resin composition containing a crystalline polypropylene satisfying a specific MFR value range and a specific Mw/Mn ratio range; a propylene polymer satisfying a specific MFR value range, a specific Mw/Mn ratio range, and a ratio of components having a molecular weight of 2,000,000 or more; a thermoplastic elastomer as an optional component; an inorganic filler as an optional component; and a crystal nucleating agent (Patent Literature 2). The propylene polymer proposed in this literature is a long-chain branched propylene polymer in which a macromer produced from an active species derived from a catalyst component is incorporated in the main chain to form a branched structure. However, when a thermoplastic elastomer and an inorganic filler are not used in combination, the effect only when 30% by weight (Example 1) or more of the propylene polymer is blended is described, and when a thermoplastic elastomer and an inorganic filler are used in combination, the effect only when the total amount of the propylene polymer and the thermoplastic elastomer is blended in 35% by weight (Example 4) or more is described, but the burr prevention effect at a blending amount less than the above amount was unknown. In addition, a special metal catalyst and a dedicated polymerization apparatus are required for synthesizing the above propylene polymer, and there was a problem in terms of process and production cost.

As described above, in a polypropylene resin, it was difficult to suppress or prevent the formation of burrs by using a small amount of modifier, that is, to obtain an injection molded body of a polypropylene resin composition compatible with fluidity and burr prevention performance.

**Citation List**

**Patent Literature**

PTL 1: JP 2005-194297 A
PTL 2: JP 2011-88955 A

## Summary of Invention

### Technical Problem

An object of the present invention is to provide an injection molded body of a polypropylene resin composition, which has excellent in fluidity and burr prevention performance.

### Solution to Problem

The present invention is as follows.

[1] An injection molded body of a polypropylene resin composition, which contains a conjugated diene-modified polypropylene resin (A) that has a melt flow rate of 1-150 g/10 min as measured at 230°C under a load of 2.16 kg and a polypropylene resin (B) that has a melt flow rate of 7-100 g/10 min as measured at 230°C under a load of 2.16 kg, wherein a content of the conjugated diene-modified polypropylene resin (A) is 0.1-50 parts by weight and a content of the polypropylene resin (B) is 99.9-50 parts by weight, relative to 100 parts by weight of a total of the conjugated diene-modified polypropylene resin (A) and the polypropylene resin (B), and the polypropylene resin composition has a melt flow rate of 10-80 g/10 min as measured at 230°C under a load of 2.16 kg, while having a melt tension of 0.7-30 gf as measured at 200°C at 10 m/min.

[2] The injection molded body according to the above [1], wherein the melt flow rate of the conjugated diene-modified polypropylene resin (A) is 10-100 g/10 min.

[3] The injection molded body according to the above [1] or [2], wherein the content of the conjugated diene-modified polypropylene resin (A) is 1-35 parts by weight and the content of the polypropylene resin (B) is 99-65 parts by weight, relative to 100 parts by weight of the total of the conjugated diene-modified polypropylene resin (A) and the polypropylene resin (B).

[4] The injection molded body according to any one of the above [1] to [3], wherein the conjugated diene-modified polypropylene resin (A) is a molten mixture of (a) a polypropylene resin, (b) a radical polymerization initiator, and (c) a conjugated diene compound.

[5] A method for producing the injection molded body according to any one of the above [1] to [4], including a step of injection molding the polypropylene resin composition at a temperature of 170-300°C.

### Advantageous Effects of Invention

The injection molded body of the polypropylene resin composition of the present invention has excellent fluidity and burr prevention performances. Therefore, it is possible to perform continuous and stable injection molding, and it is possible to omit or simplify the operation of removing the burr of the injection molded body. The injection molded body of the present invention is particularly suitable for a large-sized injection molded body produced by using a large mold. Furthermore, the injection molded body of the polypropylene resin composition of the present invention can be adjusted to a desired fluidity, and as compared with a conventionally known injection molded body of a polypropylene resin, a desired injection molded body can be obtained.

### Description of Embodiments

Hereinafter, the embodiments of the present invention will be described.

The injection molded body of the present invention is an injection molded body composed of a polypropylene resin composition. The polypropylene resin composition contains a conjugated diene-modified polypropylene resin (A) that has a melt flow rate of 1-150 g/10 min as measured at 230°C under a load of 2.16 kg and a polypropylene resin (B) that has a melt flow rate of 7-100 g/10 min as measured at 230°C under a load of 2.16 kg, in which the content of the conjugated diene-modified polypropylene resin (A) is 0.1-50 parts by weight and the content of the polypropylene resin (B) is 99.9-50 parts by weight, relative to 100 parts by weight of the total of the conjugated diene-modified polypropylene resin (A) and the polypropylene resin (B), and the polypropylene resin composition has a melt flow rate of 10-80 g/10 min as measured at 230°C under a load of 2.16 kg, while having a melt tension of 0.7-30 gf as measured at 200°C at 10 m/min. The injection molded body of the present invention refers to an injection molded body that is not foamed. A foam produced by blending a foaming agent in a resin composition and foaming during molding is not included in the scope of the injection molded body of the present invention.

<Conjugated Diene-Modified Polypropylene Resin (A)>

The conjugated diene-modified polypropylene resin (A) of the present invention is a resin obtained by introducing a branched structure into a polypropylene resin by reacting a conjugated diene compound with a polypropylene resin and increasing the molecular weight thereof.

The conjugated diene-modified polypropylene resin (A) of the present invention has a melt flow rate of 1-150 g/10 min as measured at 230°C under a load of 2.16 kg. When the melt flow rate of the component (A) is less than 1 g/10 min, there is no problem from the viewpoint of suppressing burrs, but the fluidity of the resin composition is insufficient and there are cases where troubles such as short-shot etc. may occur in injection molding in a large mold. When the melt flow rate of the component (A) exceeds 150 g/10 min, mixing with the component (B) becomes insufficient, or the metering process in injection molding in the dry blend may become unstable in some cases. If the melt flow rate of the component (A) exceeds 150 g/10 minutes, it becomes difficult to adjust the melt flow rate of the composition within the range described later, and if mixing with the component (B) becomes insufficient, the composition becomes nonuniform and the effect of suppressing burrs is reduced, which is not preferable. The melt flow rate of the component (A) is preferably 10-100 g/10 minutes.

Here, the melt flow rate (hereinafter sometimes abbreviated as "MFR" in some cases) refers to the value calculated as follows: using a Melt Indexer F-F01 (manufactured by Toyo Seiki Seisaku-sho, Ltd.) in accordance with JIS K 7210: 1999, the amount of resin extruded from a die for a predetermined period of time at 230°C under a load of 2.16 kg is measured and used to calculate an amount of resin extruded for 10 minutes. This converted value was calculated by MFR automatic calculation processing (Method B). The calculation formulas are as follows. Even when the melt flow rate exceeds 50 (g/10 min), this method was applied.

$$MFR \ (g/10 \ min) = (427 \times L \times \rho)/t$$

L (interval of test conditions): 3 (cm)
$\rho$ (melt density at test temperature): A value (g/cm$^3$) calculated according to the following formula by cutting method, provided that $\rho$ is set to 0.75 (g/cm$^3$) when the cutting method is impossible.

$$\rho = m/(0.711 \times L)$$

m: mass (g) of the sample flowing out as the piston moves through the interval L, measured by the cutting method.
L: same as above interval
t (interval movement time): actual measured value (seconds)

That is, when the cutting method can be applied, MFR may be calculated by the following calculation formula.

$$MFR \ (g/10 \ min) = (600 \times m)/t$$

The conjugated diene-modified polypropylene resin (A) of the present invention is preferably obtained by melt-mixing (a) a polypropylene resin, (b) a radical polymerization initiator, and (c) a conjugated diene compound. This molten mixture is excellent in that it does not require expensive equipment and can be manufactured at low cost.

<Polypropylene Resin (a)>

The polypropylene resin (a) used for obtaining the conjugated diene-modified polypropylene resin (A) is a polypropylene resin having crystallinity. A homopolymer of propylene, a copolymer of propylene and a monomer copolymerizable with propylene may be used. It may also be a mixture of a propylene homopolymer and a propylene copolymer. As the copolymer, either a block copolymer or a random copolymer may be used. As the copolymer, a copolymer containing 51% by weight or more of propylene is preferable, and from the viewpoint of maintaining crystallinity, rigidity, chemical resistance, and the like which are the features of the polypropylene resin, a copolymer containing propylene in an amount of 75% by weight or more is more preferred.

Examples of the monomer copolymerizable with propylene include an $\alpha$-olefin having 2 or 4 to 12 carbon atoms, such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene; cyclic olefins, such as cyclopentene, norbornene, and tetracyclo[6,2,11,8,13,6]-4-dodecene; dienes, such as 5-methylene-2-norbomene, 5-ethylidene-2-norbornene, 1,4-hexadiene, methyl-1,4-hexadiene, and 7-methyl-1,6-octadiene; vinyl monomers, such as vinyl chloride, vinylidene chloride, acrylonitrile, vinyl acetate, acrylic acid, methacrylic acid, maleic acid, ethyl acrylate, butyl acrylate, methyl methacrylate, maleic anhydride, styrene, methylstyrene, vinyl toluene, and divinylbenzene; and the like. These may be used singly or in combination of two or more kinds thereof. Of these, $\alpha$-olefins are preferable from the viewpoint of improvement in cold resistance, low cost, etc., and ethylene and 1-butene are more preferred.

Specific examples of preferable polypropylene resin (a) include homopolymers of propylene, random copolymers of propylene-ethylene, block copolymers of propylene-ethylene, and other propylene-ethylene copolymers. These may be mixed and used.

The propylene-ethylene copolymer may be a propylene polymer in which a polymer containing ethylene as a main component and an ethylene-propylene rubber-like copolymer are dispersed in a linear polymer containing propylene as a main component to form a sea-island structure. Such a propylene polymer is referred to as impact-resistant polypropylene, conventionally as block polypropylene in Japan, but it is not a block copolymer in a chemical sense.

<Radical Polymerization Initiator (b)>

As the radical polymerization initiator (b) used for obtaining the conjugated diene-modified polypropylene resin (A), generally a peroxide, an azo compound or the like can be mentioned, but those having a hydrogen abstraction ability from the polypropylene resin (a) or the conjugated diene compound (c) are preferred. Although not particularly limited, examples thereof include organic peroxides such as ketone peroxide, peroxyketal, hydroperoxide, dialkyl peroxide, diacyl peroxide, peroxydicarbonate, and peroxyester.

Among these, in particular, those having a high hydrogen abstraction ability are preferable, and examples thereof include peroxyketals, such as 1,1-bis(t-butylperoxy) 3,3,5-trimethylcyclohexane, 1,1-bis(t-butylperoxy)cyclohexane, n-butyl 4,4-bis(t-butylperoxy)valerate, and 2,2-bis(t-butylperoxy)butane; dialkyl peroxides, such as dicumyl peroxide, 2,5-dimethyl-2,5-di(t-butylperoxy)hexane, $\alpha,\alpha$'-bis(t-butylperoxy-m-isopropyl)benzene, t-butyl cumyl peroxide, di-t-butyl peroxide, and 2,5-dimethyl-2,5-di(t-butylperoxy)-3-hexyne; diacyl peroxides such as benzoyl peroxide; and peroxy esters, such as t-butyl peroxy octate, t-butyl peroxy isobutyate, t-butyl peroxy laurate, t-butyl peroxy 3,5,5-trimethyl hexanoate, t-butyl peroxy isopropyl carbonate, 2,5-dimethyl-2,5-di(benzoylperoxy)hexane, t-butyl peroxy acetate, t-butyl peroxy benzoate, and di-t-butyl peroxy isophthalate. etc. These may be used singly or in combination of two or more kinds thereof.

The addition amount of the radical polymerization initiator (b) used for obtaining the conjugated diene-modified polypropylene resin (A) is preferably 0.05 parts by weight or more and 10 parts by weight or less, more preferably 0.2 parts by weight or more and 5 parts by weight or less, relative to 100 parts by weight of the polypropylene resin (a). When the addition amount of the radical polymerization initiator is less than 0.05 parts by weight, modification may be insufficient in some cases, when the addition amount of the radical polymerization initiator exceeds 10 parts by weight, molecular chain breakage preferentially takes place over such modification, and the desired modification effect may not be obtained in some cases.

<Conjugated Diene Compound (c)>

Examples of the conjugated diene compound (c) used for obtaining the conjugated diene-modified polypropylene resin (A) include butadiene, isoprene, 1,3-heptadiene, 2,3-dimethylbutadiene, 2,5-dimethyl-2,4-hexadiene, and the like. These may be used singly or in combination. Among them, butadiene and isoprene are preferable because they are inexpensive, easy to handle, and reactions are easy to proceed uniformly.

The addition amount of the conjugated diene compound (c) is preferably 0.01 parts by weight or more and 5 parts by weight or less, more preferably 0.05 parts by weight or more and 2 parts by weight or less, relative to 100 parts by weight of the polypropylene resin (a). If the addition amount of the conjugated diene compound is less than 0.01 parts by weight, modification may be insufficient in some cases, and if it exceeds 5 parts by weight, fluidity may be insufficient in some cases.

In producing the conjugated diene-modified polypropylene resin (A), a monomer copolymerizable with the conjugated diene compound may be used in combination with the conjugated diene compound. Examples of such copolymerizable monomers include vinyl chloride, vinylidene chloride, acrylonitrile, methacrylonitrile, acrylamide, methacrylamide, vinyl acetate, acrylic acid, methacrylic acid, maleic acid, maleic anhydride, an acrylic acid metal salt, a methacrylic acid metal salt, an acrylic acid esters, such as methyl acrylate, ethyl acrylate, butyl acrylate, 2-ethylhexyl acrylate, stearyl acrylate, etc, methyl methacrylate, ethyl methacrylate, butyl methacrylate, 2-ethylhexyl methacrylate, stearyl methacrylate, and the like.

<Conditions Related to Production of Conjugated Diene-Modified Polypropylene Resin (A)>

In the production of the conjugated diene-modified polypropylene resin (A), it is possible to relatively easily adjust the melt flow rate of the conjugated diene-modified polypropylene resin (A) within the range of 1 or more and 150 or less when the addition amount of the radical polymerization initiator (b) is 0.1 times or more and 10 times or less (weight basis) the addition amount of the conjugated diene compound (c). The addition amount of the radical polymerization initiator (b) is preferably 0.5 times or more and 7.5 times or less, more preferably 0.75 times or more and 5 times or less the addition amount of the conjugated diene compound (c).

Examples of an apparatus for reacting the polypropylene resin (a), the radical polymerization initiator (b), and the conjugated diene compound (c) in order to obtain the conjugated diene-modified polypropylene resin (A) include kneaders such as roll, co-kneader, Banbury mixer, Brabender mixer, single-screw extruder, and twin-screw extruder; horizontal stirrers such as twin-screw surface renewal devices and twin-screw multi-disk equipment; vertical stirrers such as double helical ribbon stirrer. Among those, kneaders are preferably used, and extruders are particularly preferred from the viewpoint of productivity.

The order and method for mixing and kneading (stirring) the polypropylene resin (a), the radical polymerization initiator (b), and the conjugated diene compound (c) to obtain the conjugated diene-modified polypropylene resin (A) are not particularly limited. After mixing the polypropylene resin (a), the radical polymerization initiator (b), and the conjugated diene compound (c), melt kneading (stirring) may be carried out. Alternatively, the polypropylene resin (a) may be melt kneaded (stirred), and then the radical polymerization initiator (b) and the conjugated diene compound (c) may be simultaneously or separately mixed, either all at once or in portions. The temperature in the kneader (stirrer) is preferably 130 to 300°C because the polypropylene resin (a) is molten but not thermally decomposed. In addition, the kneading (stirring) time is generally preferably 1 to 60 minutes.

In this manner, the conjugated diene-modified polypropylene resin (A) can be produced. The shape and size of the conjugated diene-modified polypropylene resin (A) to be produced are not limited, and the resin (A) may be in the form of pellets.

<Polypropylene Resin (B)>

The polypropylene resin (B) refers to a polypropylene resin having crystallinity. The polypropylene resin modified with the conjugated diene is not included in the concept of the polypropylene resin (B). The polypropylene resin (B) may be either a homopolymer of propylene or a copolymer of propylene and a monomer copolymerizable with propylene. The polypropylene resin (B) may also be a mixture of propylene homopolymer and copolymer. The copolymer may be a so-called block copolymer or a random copolymer. As the copolymer, a copolymer containing 51% by weight or more of propylene is preferable, and from the viewpoint of maintaining crystallinity, rigidity, chemical resistance, and the like which are the features of the polypropylene resin, a copolymer containing 75% parts by weight or more of propylene is more preferred. As the monomer copolymerizable with propylene, the above-mentioned monomers can be used.

Specific examples of preferable polypropylene resin (B) include a propylene homopolymer, a propylene-ethylene random copolymer, a propylene- ethylene block copolymer, and other propylene-ethylene copolymers. These may be mixed and used.

The propylene-ethylene copolymer may be a propylene polymer in which a polymer containing ethylene as a main component and an ethylene-propylene rubber-like copolymer are dispersed in a linear polymer containing propylene as a main component to form a sea-island structure. Such a propylene polymer is referred to as an impact-resistant polypropylene, conventionally as a block polypropylene in Japan, but it is not a block copolymer in a chemical sense.

The polypropylene resin (B) has a melt flow rate of 7-100 g/10 minutes, preferably 10-70 g/10 minutes, more preferably 20-50 g/10 minutes, as measured under the above-mentioned conditions. When the melt flow rate of the polypropylene resin (B) is within the above range, in the production of the injection molded body, the molten resin can be filled into a mold at a relatively low pressure during molding using a mold whose cavity includes a thin portion with a clearance of approximately 1 to 2 mm, and stable injection molding tends to be continuously carried out. If the melt flow rate of the component (B) exceeds 100 g/10 minutes, it becomes difficult to adjust the melt flow rate of the composition within the range described later, and when the mixing with the component (A) becomes insufficient, the composition becomes nonuniform and the effect of suppressing burrs is diminished, which is not preferable. When the melt flow rate of the component (B) is less than 7 g/10 min, there is no problem from the viewpoint of suppressing burrs, but molding defects such as short shots are likely to be occurred or excessive injection pressure is required, so that another molding defect may occur, which is not preferable.

<Polypropylene Resin Composition>

The polypropylene resin composition constituting the injection molded body of the present invention has a melt flow rate of 10-80 g/10 min, preferably 20-80 g/10 min, more preferably 30-80 g/10 min, even more preferably 40-80 g/10 min, particularly preferably 60-80 g/10 min, as measured under the above-mentioned conditions.

In the case where a relatively compact molded body is to be obtained and not so much fluidity is required or when it is desired to increase the mold transferability or the like by applying a certain amount of resin pressure during molding, the melt flow rate of the polypropylene resin composition is preferably 10-60 g/10 min, more preferably 10-50 g/10 min, even more preferably 10-40 g/10 min.

In the case where a relatively medium-sized molded body is to be obtained and it is necessary to achieve a balance between flowability and resin pressure during molding to some extent, the melt flow rate of the polypropylene resin composition is preferably 20-75 g/10 min, more preferably from 25-70 g/10 min, even more preferably 30-65 g/10 min.

When the melt flow rate of the polypropylene resin composition is within the above range, in the production of the injection molded body, the molten resin can be filled into a mold at a relatively low pressure during molding using a mold whose cavity includes a thin portion with a clearance of approximately 1 to 2 mm, and stable injection molding tends to be continuously carried out. If the melt flow rate of the composition exceeds 80 g/10 min, the effect of suppressing burrs of the component (A) is reduced, which is not desirable. When the melt flow rate of the composition is less than 10 g/10 min, the effect of suppressing burrs is not affected, but molding defects such as short shots are likely to be occurred or excessive injection pressure is required, so that another molding defect may occur, which is not preferable.

The melt flow rate of the resin composition is a numerical value measured after sufficient melt-kneading of each component, and can be easily adjusted on the basis of the melt flow rate of each of the conjugated diene-modified polypropylene resin (A) and the polypropylene resin (B), the blending amount of each component, and the like.

The polypropylene resin composition has a melt tension of 0.7-30 gf, preferably 1.0-20 gf, more preferably 1.5-10 gf, even more preferably 2.0-5.0 gf, as measured at 200°C and 10 m/min. When the melt tension of the polypropylene resin composition is within the above range, the injection molded body can achieve an excellent effect of suppressing burrs. The melt tension of the resin composition is a numerical value measured after sufficient melt-kneading of each component and can be easily adjusted based on the melt flow rate of each of the conjugated diene-modified polypropylene resin (A) and the polypropylene resin (B), as well as on the basis of the type, the combination, the blending amount, etc. of each component.

In the present application, the melt tension (hereinafter occasionally abbreviated as "MT") is measured as follows. Using a CAPILOGRAPH (manufactured by Toyo Seiki Seisaku-sho, Ltd.) which includes a $\phi$ 10 mm cylinder having an end with a 1 mm orifice having a length of 10 mm and is equipped with an attachment for melt tension measurement, a strand discharged from a die when a piston is fallen at 200°C and a piston fall speed of 10 mm/min, is connected to a pulley with a load cell located 520 mm below, and taken up at a speed of 10 m/min by the pulley, and a load applied to the pulley with a load cell is measured with time. The maximum value and the minimum value of the load obtained after the load shake was stabilized roughly were measured, and the average value of them was regarded as the melt tension. Note that in the case where the strand is broken, measurement is regarded as unmeasurable and in the case where the load applied to the load cell pulley is low enough to be undetectable, the melt tension is regarded as 0.

The melt tension indicates the tension required for deforming the molten resin, whereas the melt flow rate is a measure showing the fluidity of the molten resin, so that both are different concepts. As shown in a later comparative example, even when the melt flow rate of the resin composition is within the range specified in the present application and when the melt tension of the resin composition is not within the range specified in the present application, a desired effect of suppressing burrs cannot be achieved. Focusing attention on the melt tension of the resin composition, it is not known at all in the past that burrs of the injection molded body can be reduced by adjusting the melt tension, and such a reduction of burrs is the finding that is found for the first time by the present inventors. In the present invention, a mechanism of suppressing burrs of the injection molded body by using the predetermined components (A) and (B) and adjusting both the melt flow rate and the melt tension of the resin composition within a predetermined range is unknown at present. However, one of the reasons is thought to be that the molten resin hardly intrudes into the gaps of the mold due to the increased elasticity of the molten resin, resulting in less generation of burrs. In addition, it is considered that the crystallization promoting effect achieved by the addition of the component (A) as described below also contributes to the reduction in generation of burrs.

In the polypropylene resin composition, the content of the conjugated diene-modified polypropylene resin (A) is 0.1-50 parts by weight and the content of the polypropylene resin (B) is 99.9-50 parts by weight, relative to 100 parts by weight of the total of the conjugated diene-modified polypropylene resin (A) and the polypropylene resin (B). When the blending ratio is within the above range, an injection molded body satisfying both fluidity and burr prevention effect can be provided at low cost. If the blending ratio is out of the above range, for example, when the content of the conjugated diene-modified polypropylene resin (A) is less than 0.1 parts by weight, sufficient burr prevention effect tends to be not obtained. If the content of the conjugated diene-modified polypropylene resin (A) exceeds 50 parts by weight, the fluidity tends to be lowered and the appearance of the molded product tends to deteriorate. From the viewpoint of fluidity and burr prevention effect, the content of (A) is preferably 0.5-45 parts by weight and the content of (B) is preferably 99.5-55 parts by weight; more preferably the content of (A) is 1-35 parts by weight and the content of (B) is 99-65 parts by weight;

even more preferably, the content of (A) is 2-25 parts by weight and the content of (B) is 98-75 parts by weight; particularly preferably, the content of (A) is 3-15 parts by weight and the content of (B) is 97-85 parts by weight.

<Other Additives>

The polypropylene resin composition constituting the injection molded body of the present invention may further contain a polypropylene resin different from any of the above-mentioned components (A) and (B), a high-density polyethylene resin, a high pressure method low density polyethylene resin, a linear low density polyethylene resin, an ethylene-α-olefin copolymer, an olefin elastomer, a styrene elastomer, and other thermoplastic resins, within a range in which the effect of the present invention is not impaired.

The polypropylene resin composition may further contain stabilizers such as an antioxidant, a metal deactivator, a phosphorus processing stabilizer, an ultraviolet absorber, an ultraviolet stabilizer, a fluorescent whitening agent, a metal soap, and an antacid adsorbent; and additives such as a crosslinking agent, a chain transfer agent, a nucleating agent, a plasticizer, a lubricant, a filler, a reinforcing material, a pigment, a dye, a flame retardant, and an antistatic agent. However, the polypropylene resin composition does not contain a foaming agent.

<Injection Molded Body>

The present invention relates to an injection molded body of the polypropylene resin composition. The injection molded body of the present invention is excellent in fluidity and burr prevention performance. Therefore, it is particularly suitable for large-size injection molded bodies manufactured using a large mold. Furthermore, the injection molded body of the present invention can be adjusted to a desired fluidity and can suppress burrs, so that a desired injection molded body can be obtained as compared with the conventionally known injection molded body of a polypropylene resin.

The injection molding method that can be used for manufacturing the injection molded body of the present invention is not particularly limited, and a known method can be applied. Specific molding conditions can be appropriately determined in consideration of the melt flow rate and melt tension indicated by the polypropylene resin composition, the type of molding machine, the shape of mold, and the like.

Specifically, the resin temperature is preferably 170 to 300°C, more preferably 180 to 280°C, even more preferably 190 to 270°C, and the mold temperature is preferably 10 to 100°C, more preferably 20 to 80°C. It is also preferable to carry out the molding under the conditions of molding cycle 1 to 120 minutes, injection speed 10 to 300 mm/sec, injection pressure 10 to 200 MPa, and the like.

The injection molded body of the present invention can be used for various purposes. Particularly, as a large-sized injection molded body in which burrs are suppressed, it can be used as an automobile part, an exterior part for household electric appliances, an exterior part for industrial machinery, an exterior member for building, an interior member for building, a protective member for absorbing an impact, a casing of an electronic component, and the like.

**Examples**

Hereinafter, the present invention will be explained in more detail by way of examples, but the present invention is not limited to these examples at all.

In examples and comparative examples, test methods and determination criteria used in various evaluations are as follows.

(1) Melt Flow Rate (MFR)

The melt flow rate refers to the value calculated as follows. Using a Melt Indexer F-F01 (manufactured by Toyo Seiki Seisaku-sho, Ltd.) in accordance with JIS K 7210: 1999, the amount of resin extruded from a die for a predetermined period of time at 230°C under a load of 2.16 kg is measured and used to calculate an amount of resin extruded for 10 minutes as the melt flow rate. Such value was obtained by MFR automatic calculation processing (Method B). The calculation formulas are as follows. Even when the melt flow rate exceeds 50 (g/10 min), this method was applied.

$$\text{MFR (g/10 min)} = (427 \times L \times \rho)/t$$

L (interval of test conditions): 3 (cm)
$\rho$ (melt density at test temperature): it is a value (g/cm$^3$) calculated according to the following formula by a cutting method, provided that ρ is set to 0.75 (g/cm$^3$) when the cutting method is impossible.

$$\rho = m/(0.711 \times L)$$

m: mass (g) of the sample flowing out as a piston moves through the interval L, measured by the cutting method.
L: same as above interval
t (interval movement time): actual measured value (seconds)

That is, when the cutting method can be applied, calculation may be performed by the following calculation formula.

$$MFR\ (g/10\ min) = (600 \times m)/t$$

(2) Melt Tension (MT)

Using a CAPILOGRAPH (manufactured by Toyo Seiki Seisaku-sho, Ltd.) which includes a φ 10 mm cylinder having an end with a φ 1mm orifice having a length of 10 mm and was equipped with an attachment for melt tension measurement, a strand discharged from a die when a piston was fallen at 200°C and a piston fall speed of 10 mm/min, was connected to a pulley with a load cell located 370 mm or 520 mm below, and taken up at a speed of 10 m/min by the pulley, and a load applied to the pulley with a load cell was measured with time. The maximum value and the minimum value of the load obtained after the load shake was stabilized roughly were measured, and the average value of them was regarded as the melt tension. In addition, in the case where the strand was broken, measurement was regarded as unmeasurable and in the case where the load applied to the load cell pulley was low enough to be undetectable, the melt tension was regarded as 0.

(3) Crystallization Temperature

According to the measurement method in accordance with the JIS K 7121 (1987), using a differential scanning calorimeter Q1000 manufactured by TA Instruments Japan Inc., 4 to 10 mg of a measurement sample was heated from room temperature to 230°C at a rate of 20°C/min, held at 230°C for 5 minutes to melt, then cooled down from 230°C to 0°C at a rate of 10°C/min, thereby to obtain a DSC curve of crystallization behavior. In the obtained DSC curve, the temperature at the point where the calorific value becomes the maximum at the main crystallization peak was regarded as the crystallization temperature.

(4) Burr Evaluation Described in Tables 3 to 5

Using an injection molding machine (IS-100 manufactured by Toyo Machinery & Metal Co., Ltd.), injection molding was carried out in a burr evaluation mold having a disk-shaped cavity with a diameter of 50 mm and a thickness of 2 mm at the minimum filling pressure capable of completely filling the resin composition.
The length of burr (burr length) generated in the injection molded body by the slit having a thickness (clearance) of 0.01 mm, 0.02 mm, 0.03 mm or 0.04 mm × width of 4 mm provided in the circumferential portion of the cavity was measured using a magnifying lens. The shorter the burr length, the better the effect (burr characteristics) of suppressing burr generation is. The burr characteristics were evaluated according to the following criteria.

(Tables 3 and 4)

○: Burr was not observed, or burr length was less than 0.1 mm.
△: Burr length was 0.1 mm to 0.3 mm.
×: Burr length was 0.4 mm or more.
-: Not evaluated.

(Table 5)

⊙: Burr was not observed.
○△: Burr was observed, and burr length was less than 0.1 mm.

Δ: Burr length was 0.1 mm to 0.3 mm.
×: Burr length was 0.4 mm or more.
-: Not evaluated

(5) Burr Evaluation Described in Tables 6 to 8

Using an injection molding machine (IS-100 IV manufactured by Toyo Machinery & Metal Co., Ltd.), injection molding was carried out in a burr evaluation mold having a disk-shaped cavity with a diameter of 50 mm and a thickness of 2.5 mm at a filling pressure of 100 MPa. When the resin composition could not be filled completely into the cavity at the pressure, such a case was judged to be unevaluable due to poor molding.
The length of burr (burr length) generated in the injection molded body by the slit having a thickness (clearance) of 0.02 mm or 0.03 mm × width of 4 mm provided on the circumferential portion of the cavity was measured using a magnifying lens. The shorter the burr length, the better the effect (burr characteristics) of suppressing burr generation is. The burr characteristics were evaluated according to the following criteria in Tables 6 to 7. In Table 8, concrete numbers of the burr length are described.

(Tables 6 to 7)

OK: Burr was not observed, or burr length was less than 0.2 mm.
NG: Burr length was 0.2 mm or more.

<Production of Conjugated Diene-Modified Polypropylene Resin (A)>

(Production Example 1)

A mixture of 100 parts by weight of a propylene homopolymer (for blowing and extrusion) having a melt flow rate of 2 g/10 min as a (a) polypropylene resin and 0.45 parts by weight of t-butylperoxy isopropyl carbonate as a (b) radical polymerization initiator was fed to a 46 mm$\phi$ twin-screw extruder (L/D = 62) at a rate of 70 kg/hour from the hopper and melt-kneaded at a cylinder temperature of 200°C. Then, from the press-in part provided in the middle, 0.55 parts by weight of isoprene as a (c) conjugated diene compound was fed at a rate of 0.385 kg/hour using a metering pump and melt-kneaded in the twin-screw extruder to obtain pellets of a conjugated diene-modified polypropylene resin (A-1). The MFR was 1 g/10 min. The obtained conjugated diene-modified polypropylene resin (A-1) is shown in Table 1.

(Production Example 2)

A conjugated diene-modified polypropylene resin (A-2) was obtained in the same manner as in Production Example 1 except that a propylene homopolymer (for injection molding) having a melt flow rate of 8 g/10 min was used as a (a) polypropylene resin, the blending amount of t-butylperoxy isopropyl carbonate as a (b) radical polymerization initiator was changed to 0.75 parts by weight, and the supply amount of isoprene as a (c) conjugated diene compound was changed to 0.65 parts by weight. The MFR was 3 g/10 min.

(Production Example 3)

A conjugated diene-modified polypropylene resin (A-3) was obtained in the same manner as in Production Example 1 except that a propylene homopolymer (for injection molding) having a melt flow rate of 8 g/10 min was used as a (a) polypropylene resin, the blending amount of t-butylperoxy isopropyl carbonate as a (b) radical polymerization initiator was changed to 0.75 parts by weight, and the supply amount of isoprene as a (c) conjugated diene compound was changed to 0.6 parts by weight. The MFR was 7 g/10 min.

(Production Example 4)

A conjugated diene-modified polypropylene resin (A-4) was obtained in the same manner as in Production Example 1 except that a propylene homopolymer (for injection molding) having a melt flow rate of 45 g/10 min was used as a (a) polypropylene resin, the blending amount of t-butylperoxy isopropyl carbonate as a (b) radical polymerization initiator was changed to 1.1 parts by weight, and the supply amount of isoprene as a (c) conjugated diene compound was changed to 0.5 parts by weight. The MFR was 60 g/10 min.

(Production Example 5)

A conjugated diene-modified polypropylene resin (A-5) was obtained in the same manner as in Production Example 1 except that a propylene homopolymer (for injection molding) having a melt flow rate of 45 g/10 min was used as a (a) polypropylene resin, the blending amount of t-butylperoxy isopropyl carbonate as a (b) radical polymerization initiator was changed to 1.1 parts by weight, and the supply amount of isoprene as a (c) conjugated diene compound was changed to 0.2 parts by weight. The MFR was 150 g/10 min.

(Production Example 6)

A conjugated diene-modified polypropylene resin (A-6) was obtained in the same manner as in Production Example 1 except that a propylene homopolymer (for injection molding) having a melt flow rate of 45 g/10 min was used as a (a) polypropylene resin, the blending amount of t-butylperoxy isopropyl carbonate as a (b) radical polymerization initiator was changed to 1.1 parts by weight, and the supply amount of isoprene as a (c) conjugated diene compound was changed to 0.55 parts by weight. The MFR was 43 g/10 min.

[Table 1]

| | | | Production Example 1 | Production Example 2 | Production Example 3 | Production Example 4 | Production Example 5 | Production Example 6 |
|---|---|---|---|---|---|---|---|---|
| (a) Linear polypropylene resin | Melt flow rate (MFR) | g/10 min | 2 | 8 | 8 | 45 | 45 | 45 |
| | | Parts by weight | 100 | 100 | 100 | 100 | 100 | 100 |
| (b) Radical initiator | | Parts by weight | 0.45 | 0.75 | 0.75 | 1.1 | 1.1 | 1.1 |
| (c) Conjugated diene compound | | Parts by weight | 0.55 | 0.65 | 0.6 | 0.5 | 0.2 | 0.55 |
| (A) Conjugated diene-modified polypropylene resin | Number | | A-1 | A-2 | A-3 | A-4 | A-5 | A-6 |
| | Melt flow rate (MFR) | g/10 min | 1 | 3 | 7 | 60 | 150 | 43 |
| | Melt tension (MT) 200°C 10 m/min | Gram-force | Unmeasurable (broken) | Unmeasurable (broken) | Unmeasurable (broken) | 3.39 | 1.38 | 4.45 |

<Polypropylene Resin (B)>

As the polypropylene resin (B), the following materials were used.

(B-1) Propylene homopolymer having a melt flow rate of 0.9 g/10 min (E-100GPL, manufactured by Prime Polymer Co., Ltd.),
(B-2) Propylene homopolymer having a melt flow rate of 3 g/10 min (F113G, manufactured by Prime Polymer Co., Ltd.),
(B-3) Propylene homopolymer having a melt flow rate of 7 g/10 min (J-700GP, manufactured by Prime Polymer Co., Ltd.),
(B-4) Propylene-ethylene copolymer having a melt flow rate of 30 g/10 min (J830HV, manufactured by Prime Polymer Co., Ltd.),
(B-5) Propylene-ethylene copolymer having a melt flow rate of 45 g/10 min (J708UG, manufactured by Prime Polymer Co., Ltd.),
(B-6) Propylene-ethylene copolymer having a melt flow rate of 55 g/10 min (J709QG, manufactured by Prime Polymer Co., Ltd.),
(B-7) Propylene-ethylene copolymer having a melt flow rate of 60 g/10 min (YS559N, manufactured by SanAllomer Ltd.),
(B-8) Propylene-ethylene copolymer having a melt flow rate of 5 g/10 min (J704UG, manufactured by Prime Polymer Co., Ltd.),
(B-9) Propylene-ethylene copolymer having a melt flow rate of 100 g/10 min (VMD81M, manufactured by SanAllomer Ltd.),
(B-10) Propylene homopolymer having a melt flow rate of 60 g/10 min (S119, manufactured by Prime Polymer Co., Ltd.), and
(B-11) Propylene homopolymer having a melt flow rate of 30 g/10 min (J107G, manufactured by Prime Polymer Co., Ltd.).

The propylene-ethylene copolymers described in (B-4), (B-5), (B-6), (B-7), (B-8), and (B-9) refer to propylene polymers in which a polymer containing ethylene as a main component and an ethylene-propylene rubber-like copolymer are dispersed in a linear polymer containing propylene as a main component to form a sea-island structure. Such a propylene polymer is referred to conventionally as a block polypropylene and the like in Japan.
With respect to (B-4), (B-6), (B-8), (B-9), (B-10), and (B-11), each melt tension of the resins alone was also measured.

[Table 2]

| Number | Product name | Manufacturer | Composition | MFR (g/10 min) | MT (gf) 200°C 10 m/min |
|--------|-------------|--------------|-------------|----------------|------------------------|
| B-1 | E-100GPL | Manufactured by Prime Polymer Co., Ltd. | Propylene homopolymer | 0.9 | - |
| B-2 | F113G | Manufactured by Prime Polymer Co., Ltd. | Propylene homopolymer | 3 | - |
| B-3 | J-700GP | Manufactured by Prime Polymer Co., Ltd. | Propylene homopolymer | 7 | - |
| B-4 | J830HV | Manufactured by Prime Polymer Co., Ltd. | Propylene-ethylene copolymer | 30 | 0.9 |
| B-5 | J708UG | Manufactured by Prime Polymer Co., Ltd. | Propylene-ethylene copolymer | 45 | - |
| B-6 | J709QG | Manufactured by Prime Polymer Co., Ltd. | Propylene-ethylene copolymer | 55 | 0.6 |
| B-7 | YS559N | Manufactured by SunAllomer Ltd. | Propylene-ethylene copolymer | 60 | - |

(continued)

| Number | Product name | Manufacturer | Composition | MFR (g/10 min) | MT (gf) 200°C 10 m/min |
|--------|-------------|-------------|-------------|---------|-----------|
| B-8 | J704UG | Manufactured by Prime Polymer Co., Ltd. | Propylene-ethylene copolymer | 5 | 2.3 |
| B-9 | VMD81M | Manufactured by SunAllomer Ltd. | Propylene-ethylene copolymer | 100 | 0.6 |
| B-10 | S119 | Manufactured by Prime Polymer Co., Ltd. | Propylene homopolymer | 60 | Unmeasurable |
| B-11 | J107G | Manufactured by Prime Polymer Co., Ltd. | Propylene homopolymer | 30 | 0.3 |

(Examples 1-1 to 1-4)

<Production of Injection Molded Body>

A conjugated diene-modified polypropylene resin (A), a polypropylene resin (B), and a color masterbatch as a colorant [Dye color: PP-M77255, Black, manufactured by Dainichiseika Color & Chemicals Mfg. Co., Ltd., Black, 3 parts by weight (relative to 100 parts by weight of the total of (A) and (B))] were dry-blended using the type and composition ratio shown in Table 3. From the obtained dry-blended product, an injection molded body was produced under the temperature conditions shown in Table 3, and the degree of burr formation was evaluated in accordance with the items of the above-described burr evaluation. The obtained results are shown in Table 3.

(Comparative Example 1-1)

An injection molded body was produced using the type and composition ratio of the materials shown in Table 3 in the same manner as in Example 1 except that the conjugated diene-modified polypropylene resin (A) was not used and the degree of burr formation was evaluated. The obtained results are shown in Table 3.

[Table 3]

| Number | Temperature condition (°C) | | Conjugated diene-modified polypropylene resin (A) | | Polypropylene resin (B) | | Colorant | Evaluation of burrs (clearance mm) | | | |
|---|---|---|---|---|---|---|---|---|---|---|---|
| | Nozzle tip | Mold | Number | Parts | Number | Parts | Parts | 0.01 mm | 0.02 mm | 0.03 mm | 0.04 mm |
| Example 1-1B | 220 | 40 | A-3 | 3 | B-4 | 97 | 3 | ○ | Δ | Δ | Δ |
| Example 1-2B | 220 | 40 | A-3 | 5 | B-4 | 95 | 3 | ○ | ○ | Δ | Δ |
| Example 1-3B | 220 | 40 | A-3 | 10 | B-4 | 90 | 3 | ○ | ○ | ○ | Δ |
| Example 1-4A | 200 | 40 | A-3 | 20 | B-4 | 80 | 3 | ○ | ○ | ○ | ○ |
| Example 1-4B | 220 | 40 | A-3 | 20 | B-4 | 80 | 3 | ○ | ○ | ○ | Δ |
| Example 1-4C | 240 | 40 | A-3 | 20 | B-4 | 80 | 3 | ○ | ○ | ○ | Δ |
| Example 1-4D | 260 | 40 | A-3 | 20 | B-4 | 80 | 3 | ○ | ○ | ○ | Δ |
| Comparative Example 1-1A | 200 | 40 | - | - | B-4 | 100 | 3 | Δ | Δ | Δ | Δ |
| Comparative Example 1-1B | 220 | 40 | - | - | B-4 | 100 | 3 | Δ | Δ | Δ | Δ |
| Comparative Example 1-1C | 240 | 40 | - | - | B-4 | 100 | 3 | Δ | Δ | Δ | × |
| Comparative Example 1-1D | 260 | 40 | - | - | B-4 | 100 | 3 | Δ | Δ | × | × |

From Comparative Examples 1-1A to 1-1D, it can be seen that the polypropylene resin (B-4) is a resin that easily generates burrs, but as seen in Example 1-1B, by blending 3 parts by weight of the conjugated diene-modified polypropylene resin (A) (provided that the total of the components (A) and (B) is 100 parts by weight, and the same applies hereinafter) with the (B-4), it was recognized that the effect of suppressing burrs was exhibited. Further, as seen in Examples 1-2 B and 1-3 B, it was recognized that such effect was increased by increasing the blending amount of the component (A) to 5 parts by weight and 10 parts by weight, respectively. Further, from Examples 1-4A to 1-4D, the effect of suppressing burrs was remarkable at any molding temperature of from 200°C to 260°C when 20 parts by weight of the component (A) was blended. Especially, as seen in Examples 1-4D, it was recognized that even when the molding temperature was changed to a condition such as 260°C at which burrs extremely easily generates, the effect of suppressing burrs was exhibited.

Since the compositions of Examples 1-4A to 1-4D correspond to the composition of Example 4-11 in Table 6 which will be described later, Examples 1-4A to 1-4D satisfy the requirements of MFR value and MT value of the resin composition specified in the present application. In addition, since the compositions of Example 1-1B to Example 1-3B were intermediate between the composition of Comparative Example 4-10 and the composition of Example 4-11 in Table 6, and Comparative Examples 4-10 and Examples 4-11 all satisfy the requirements of the MFR value and the MT value of the resin composition of the present application, it is estimated that Examples 1-1B to 1-3B also satisfy the requirements of the MFR value and the MT value of the resin composition of the present application.

(Example 2-1 and Comparative Example 2-1)

<Production of Injection Molded Body>

A dry-blended product was obtained in the same manner as in Example 1 using the type and composition ratio of the resins shown in Table 4, and an injection molded body was produced under the temperature conditions shown in Table 4, and the degree of burrs was evaluated in accordance with the items of the above-described burr evaluation. The obtained results are shown in Table 4.

[Table 4]

| Number | Temperature condition (°C) | | Conjugated diene-modified polypropylene resin (A) | | Polypropylene resin (B) | | Burr evaluation (clearance mm) | | | |
|---|---|---|---|---|---|---|---|---|---|---|
| | Nozzle tip | Mold | Number | Parts | Number | Parts | 0.01 mm | 0.02 mm | 0.03 mm | 0.04 mm |
| Example 2-1A | 200 | 40 | A-4 | 20 | B-6 | 80 | ○ | △ | △ | △ |
| Comparative Example 2-1A | 200 | 40 | - | - | B-6 | 100 | △ | × | × | × |
| Example 2-1B | 220 | 40 | A-4 | 20 | B-6 | 80 | ○ | △ | △ | △ |
| Comparative Example 2-1B | 220 | 40 | - | - | B-6 | 100 | △ | × | × | × |
| Example 2-1C | 240 | 40 | A-4 | 20 | B-6 | 80 | ○ | △ | △ | △ |
| Comparative Example 2-1C | 240 | 40 | - | - | B-6 | 100 | △ | × | × | × |
| Example 2-1 D | 260 | 40 | A-4 | 20 | B-6 | 80 | ○ | △ | △ | △ |

(continued)

| Number | Temperature condition (°C) | | Conjugated diene- modified polypropylene resin (A) | | Polypropylene resin (B) | | Burr evaluation (clearance mm) | | | |
|---|---|---|---|---|---|---|---|---|---|---|
| | Nozzle tip | Mold | Number | Parts | Number | Parts | 0.01 mm | 0.02 mm | 0.03 mm | 0.04 mm |
| Comparative Example 2-1D | 260 | 40 | - | - | B-6 | 100 | - | - | - | - |

From Comparative Examples 2-1A to 2-1D, it is understood that the polypropylene resin (B-6) is a resin that easily generates burrs. However, as shown in Examples 2-1A to 2-1D, it was confirmed that the resin (B-6) blended with the component (A) exhibits the effect of suppressing burrs without sacrificing the fluidity (MFR) of the composition. Furthermore, as shown in Example 2-1D, it was recognized that even when the molding temperature was changed to a condition such as 260°C at which burrs extremely easily generate, the effect of suppressing burrs was exhibited.

Since the compositions of Examples 2-1A to 2-1D correspond to the composition of Example 4-33 in Table 6 described later, Examples 2-1A to 2-1D satisfy the requirements of MFR value and MT value of the resin composition specified in the present invention.

(Examples 3-1 to 3-18 and Comparative Examples 3-1 to 3-7)

<Production of Injection Molded Body>

A dry-blended product was obtained in the same manner as in Example 1 using the type and composition ratio of the resins shown in Table 5, and an injection molded body was produced under the temperature conditions shown in Table 5, and the degree of burr formation was evaluated in accordance with the items of the above-described burr evaluation. The obtained results are shown in Table 5.

[Table 5]

| Number | Temperature °C condition | | Conjugated diene-modified polypropylene resin (A) | | Polypropylene resin(B) | | | | Burr evaluation (clearance mm) | | | |
|---|---|---|---|---|---|---|---|---|---|---|---|---|
| | Nozzle tip | Mold | Number | Parts | Number | Parts | Number | Parts | 0.01 mm | 0.02 mm | 0.03 mm | mm |
| Comparative Example 3-1B | 220 | 40 | - | - | B-5 | 100 | - | - | Δ | × | × | × |
| Example 3-1B | 220 | 40 | A-1 | 3 | B-5 | 97 | - | - | ○Δ | Δ | Δ | × |
| Example 3-2B | 220 | 40 | A-1 | 5 | B-5 | 95 | - | - | ⊙ | Δ | Δ | × |
| Example 3-3B | 220 | 40 | A-1 | 7 | B-5 | 93 | - | - | ⊙ | Δ | Δ | × |
| Example 3-4B | 220 | 40 | A-1 | 10 | B-5 | 90 | - | - | ⊙ | Δ | Δ | Δ |
| Example 3-5B | 220 | 40 | A-1 | 15 | B-5 | 85 | - | - | ⊙ | Δ | Δ | Δ |
| Example 3-6B | 220 | 40 | A-1 | 20 | B-5 | 80 | - | - | ⊙ | ○Δ | Δ | Δ |
| Example 3-7B | 220 | 40 | A-2 | 3 | B-5 | 97 | - | - | ○Δ | Δ | Δ | × |
| Example 3-8B | 220 | 40 | A-2 | 5 | B-5 | 95 | - | - | ⊙ | Δ | Δ | × |
| Example 3-9B | 220 | 40 | A-2 | 7 | B-5 | 93 | - | - | ⊙ | Δ | Δ | × |
| Example 3-10B | 220 | 40 | A-2 | 10 | B-5 | 90 | - | - | ⊙ | Δ | Δ | Δ |
| Example 3-11 B | 220 | 40 | A-2 | 15 | B-5 | 85 | - | - | ⊙ | Δ | Δ | Δ |
| Example 3-12B | 220 | 40 | A-2 | 20 | B-5 | 80 | - | - | ⊙ | ○Δ | Δ | Δ |
| Example 3-13B | 220 | 40 | A-3 | 3 | B-5 | 97 | - | - | ○Δ | Δ | Δ | × |
| Example 3-14B | 220 | 40 | A-3 | 5 | B-5 | 95 | - | - | ⊙ | Δ | Δ | × |
| Example 3-15B | 220 | 40 | A-3 | 7 | B-5 | 93 | - | - | ⊙ | Δ | Δ | × |
| Example 3-16B | 220 | 40 | A-3 | 10 | B-5 | 90 | - | - | ⊙ | Δ | Δ | × |
| Example 3-17B | 220 | 40 | A-3 | 15 | B-5 | 85 | - | - | ⊙ | Δ | Δ | Δ |
| Example 3-18B | 220 | 40 | A-3 | 20 | B-5 | 80 | - | - | ⊙ | ○Δ | Δ | Δ |
| Comparative Example 3-2B | 220 | 40 | - | - | B-5 | 95 | B-1 | 5 | ○Δ | × | × | × |
| Comparative Example 3-3B | 220 | 40 | - | - | B-5 | 90 | B-1 | 10 | ○Δ | × | × | × |

EP 3 395 883 A1

18

| Number | Temperature °C condition | | Conjugated diene-modified polypropylene resin (A) | | Polypropylene resin(B) | | | | Burr evaluation (clearance mm) | | | |
|---|---|---|---|---|---|---|---|---|---|---|---|---|
| | Nozzle tip | Mold | Number | Parts | Number | Parts | Number | Parts | 0.01 mm | 0.02 mm | 0.03 mm | mm |
| Comparative Example 3-4B | 220 | 40 | - | - | B-5 | 80 | B-1 | 20 | ○△ | × | × | × |
| Comparative Example 3-5B | 220 | 40 | - | - | B-5 | 95 | B-2 | 5 | ○△ | × | × | × |
| Comparative Example 3-6B | 220 | 40 | - | - | B-5 | 90 | B-2 | 10 | ○△ | × | × | × |
| Comparative Example 3-7B | 220 | 40 | - | - | B-5 | 80 | B-2 | 20 | ○△ | × | × | × |
| Comparative Example 3-1C | 240 | 40 | - | - | B-5 | 100 | - | - | △ | × | × | × |
| Example 3-1C | 240 | 40 | A-1 | 3 | B-5 | 97 | - | - | ○△ | △ | △ | × |
| Example 3-2C | 240 | 40 | A-1 | 5 | B-5 | 95 | - | - | ○△ | △ | △ | × |
| Example 3-3C | 240 | 40 | A-1 | 7 | B-5 | 93 | - | - | ⊙ | △ | △ | × |
| Example 3-4C | 240 | 40 | A-1 | 10 | B-5 | 90 | - | - | ⊙ | △ | △ | × |
| Example 3-5C | 240 | 40 | A-1 | 15 | B-5 | 85 | - | - | ⊙ | △ | △ | △ |
| Example 3-6C | 240 | 40 | A-1 | 20 | B-5 | 80 | - | - | ⊙ | ○△ | △ | △ |
| Example 3-7C | 240 | 40 | A-2 | 3 | B-5 | 97 | - | - | ○△ | △ | △ | × |
| Example 3-8C | 240 | 40 | A-2 | 5 | B-5 | 95 | - | - | ○△ | △ | △ | × |
| Example 3-9C | 240 | 40 | A-2 | 7 | B-5 | 93 | - | - | ⊙ | △ | △ | × |
| Example 3-10C | 240 | 40 | A-2 | 10 | B-5 | 90 | - | - | ⊙ | △ | △ | × |
| Example 3-11C | 240 | 40 | A-2 | 15 | B-5 | 85 | - | - | ⊙ | △ | △ | △ |
| Example 3-12C | 240 | 40 | A-2 | 20 | B-5 | 80 | - | - | ⊙ | ○△ | △ | △ |
| Example 3-13C | 240 | 40 | A-3 | 3 | B-5 | 97 | - | - | ○△ | △ | △ | × |
| Example 3-14C | 240 | 40 | A-3 | 5 | B-5 | 95 | - | - | ⊙ | △ | △ | × |

(continued)

| Number | Temperature °C condition | | Conjugated diene-modified polypropylene resin (A) | | Polypropylene resin(B) | | | | Burr evaluation (clearance mm) | | | |
|---|---|---|---|---|---|---|---|---|---|---|---|---|
| | Nozzle tip | Mold | Number | Parts | Number | Parts | Number | Parts | 0.01 mm | 0.02 mm | 0.03 mm | mm |
| Example 3-15C | 240 | 40 | A-3 | 7 | B-5 | 93 | - | - | ⊙ | Δ | Δ | × |
| Example 3-16C | 240 | 40 | A-3 | 10 | B-5 | 90 | - | - | ⊙ | Δ | Δ | × |
| Example 3-17C | 240 | 40 | A-3 | 15 | B-5 | 85 | - | - | ⊙ | Δ | Δ | Δ |
| Example 3-18C | 240 | 40 | A-3 | 20 | B-5 | 80 | - | - | ⊙ | ○Δ | Δ | Δ |
| Comparative Example 3-2C | 240 | 40 | - | - | B-5 | 95 | B-1 | 5 | ---- | ---- | ---- | ---- |
| Comparative Example 3-3C | 240 | 40 | - | - | B-5 | 90 | B-1 | 10 | ---- | ---- | ---- | ---- |
| Comparative Example 3-4C | 240 | 40 | - | - | B-5 | 80 | B-1 | 20 | ○Δ | × | × | × |
| Comparative Example 3-5C | 240 | 40 | - | - | B-5 | 95 | B-2 | 5 | ---- | ---- | ---- | ---- |
| Comparative Example 3-6C | 240 | 40 | - | - | B-5 | 90 | B-2 | 10 | ---- | ---- | ---- | ---- |
| Comparative Example 3-7C | 240 | 40 | - | - | B-5 | 80 | B-2 | 20 | ○Δ | × | × | × |

From Comparative Example 3-1B or 3-1C, it can be seen that the polypropylene resin (B-5) is a resin that easily generates burrs. However, as can be seen from Example 3-1B or 3-1C to 3-18B or 3-18C, it has been found that the resin (B-5) blended with the component (A) exhibits an effect of suppressing the generation of burrs. Furthermore, as can be seen from Comparative Example 3-2B or 3-2C to 3-7B or 3-7C, in the case where in place of the component (A), a polypropylene resin (B-1) or (B-2) having an MFR value similar to that of the component (A) but not modified was added to the (B-5), almost no effect of suppressing burrs was found. Specifically, the MFRs of (A-1) and (B-1) are approximately the same with each other, and the MFR of (A-2) is approximately the same with that of (B-2). For example, when comparing Example 3-2B in which 5 parts by weight of (A-1) is added to (B-5) and Comparative Example 3-2B in which 5 parts by weight of (B-1) is added to (B-5), and comparing Example 3-8B in which 5 parts by weight of (A-2) is added to (B-5) and Comparative Example 3-5B n which 5 parts by weight of (B-2) is added to (B-5), it is understood that the effect of suppressing burrs in the examples is more excellent than that of in the comparative examples.

Furthermore, in Example 3-1B or 3-1C to 3-18B or 3-18C, the burr suppressing effect also increases as the added amount of the component (A) increases to 3, 5, 10, and 20 parts by weight. On the other hand, in Comparative Examples 3-2 to 3-7, even when the addition amount of the non-modified polypropylene resin (B-1) or (B-2) was increased to 5, 10, and 20 parts by weight, there was no increase in the burr suppressing effect.

In addition, in each example, a burr suppressing effect was observed at both molding temperatures of 220°C and 240°C.

Since the compositions of Examples 3-4B and 3-4C correspond to the composition of Example 4-13 in Table 6 described later, Example 3-4B and Example 3-4C satisfy the requirements of MFR value and MT value of the resin composition specified in the present application. In addition, the other examples in Table 5 also satisfy the requirements of MFR value and MT value of the resin composition of the present application.

(Examples or Comparative Examples 4-1 to 4-51)

<Production of Injection Molded Body>

A conjugated diene-modified polypropylene resin (A), a polypropylene resin (B), and a color masterbatch as a colorant [Dye color: PP-M77255, Black, manufactured by Dainichiseika Color & Chemicals Mfg. Co., Ltd., 3 parts by weight (relative to 100 parts by weight of the total of (A) and (B))] were dry-blended. This dry blended pellet mixture was fed from a hopper to a 32 mmϕ twin-screw extruder (L/D=25) at 9 kg/hour and melt-kneaded at a cylinder temperature of 200°C to obtain pellets of the composition. From the obtained composition pellets, injection molded bodies were produced under the temperature conditions shown in Table 6 and the degree of formation of burrs was evaluated in accordance with the items of the above-described burr evaluation, provided that the clearance was 0.02 mm. The obtained results are shown in Table 6.

In addition, the composition pellet was subjected to a measurement of physical properties including a melt flow rate (MFR), a melt tension (MT), and a crystallization temperature.

[Table 6]

| | Conjugated diene-modified polypropylene resin (A) | | Polypropylene resin (B) | | Resin composition | | | Burr evaluation |
|---|---|---|---|---|---|---|---|---|
| | Number | Parts | Number | Parts | MFR 230°C 2.16 kgf | MT 200°C 10 m/min | Crystallization temperature | Clearance 0.02 mm |
| | | Parts by weight | | Parts by weight | g/10 min | gf | °C | |
| Comparative Example 4-1 | | 0 | B-8 | 100 | 5.9 | 0.7 | | Unevaluable |
| Comparative Example 4-2 | A-3 | 5 | B-8 | 95 | 5.1 | 3.1 | | Unevaluable |
| Comparative Example 4-3 | A-3 | 10 | B-8 | 90 | 5.0 | 3.6 | | Unevaluable |

(continued)

| | Conjugated diene-modified polypropylene resin (A) | | Polypropylene resin (B) | | Resin composition | | | Burr evaluation |
|---|---|---|---|---|---|---|---|---|
| | Number | Parts | Number | Parts | MFR 230°C 2.16 kgf | MT 200°C 10 m/min | Crystallization temperature | Clearance 0.02 mm |
| | | Parts by weight | | Parts by weight | g/10 min | gf | °C | |
| Comparative Example 4-4 | A-6 | 5 | B-8 | 95 | 5.6 | 3.1 | | Unevaluable |
| Comparative Example 4-5 | A-6 | 10 | B-8 | 90 | 6.0 | 3.3 | | Unevaluable |
| Comparative Example 4-6 | A-4 | 5 | B-8 | 95 | 5.5 | 2.7 | | Unevaluable |
| Comparative Example 4-7 | A-4 | 10 | B-8 | 90 | 6.1 | 3.3 | | Unevaluable |
| Comparative Example 4-8 | A-5 | 10 | B-8 | 90 | 6.5 | 2.7 | | Unevaluable |
| Comparative Example 4-9 | A-5 | 20 | B-8 | 80 | 8.7 | 2.8 | 126.0 | Unevaluable |
| Comparative Example 4-10 | | 0 | B-4 | 100 | 32.7 | 0.2 | 129.5 | NG |
| Example 4-11 | A-3 | 20 | B-4 | 80 | 23.3 | 2.0 | | OK |
| Example 4-12 | A-3 | 50 | B-4 | 50 | 18.0 | 3.5 | | OK |
| Example 4-13 | A-1 | 10 | B-5 | 90 | 30.2 | 1.3 | | OK |
| Example 4-14 | A-6 | 3 | B-4 | 97 | 28.8 | 1.1 | | OK |
| Example 4-15 | A-6 | 10 | B-4 | 90 | 29.4 | 2.0 | | OK |
| Example 4-16 | A-6 | 20 | B-4 | 80 | 30.6 | 2.8 | 128.5 | OK |
| Example 4-17 | A-6 | 50 | B-4 | 50 | 40.9 | 2.0 | | OK |
| Example 4-18 | A-4 | 3 | B-4 | 97 | 28.8 | 1.1 | | OK |
| Example 4-19 | A-4 | 5 | B-4 | 95 | 28.8 | 1.2 | | OK |
| Example 4-20 | A-4 | 10 | B-4 | 90 | 29.6 | 1.7 | | OK |

(continued)

| | Conjugated diene-modified polypropylene resin (A) | | Polypropylene resin (B) | | Resin composition | | | Burr evaluation |
|---|---|---|---|---|---|---|---|---|
| | Number | Parts | Number | Parts | MFR 230°C 2.16 kgf | MT 200°C 10 m/min | Crystallization temperature | Clearance 0.02 mm |
| | | Parts by weight | | Parts by weight | g/10 min | gf | °C | |
| Example 4-21 | A-4 | 20 | B-4 | 80 | 31.2 | 2.3 | 128.8 | OK |
| Example 4-22 | A-4 | 50 | B-4 | 50 | 46.3 | 1.7 | | OK |
| Comparative Example 4-23 | A-5 | 20 | B-4 | 80 | 41.8 | 0.5 | | NG |
| Comparative Example 4-24 | | 0 | B-6 | 100 | 53.6 | 0.0 | | NG |
| Example 4-25 | A-3 | 5 | B-6 | 95 | 43.0 | 1.3 | | OK |
| Example 4-26 | A-3 | 10 | B-6 | 90 | 38.5 | 2.0 | | OK |
| Example 4-27 | A-3 | 20 | B-6 | 80 | 31.1 | 2.7 | 130.1 | OK |
| Example 4-28 | A-3 | 50 | B-6 | 50 | 22.5 | 3.1 | | OK |
| Example 4-29 | A-6 | 5 | B-6 | 95 | 45.9 | 1.1 | 126.2 | OK |
| Example 4-30 | A-6 | 10 | B-6 | 90 | 46.3 | 17 | 126.7 | OK |
| Example 4-31 | A-6 | 20 | B-6 | 80 | 44.4 | 2.2 | 127.3 | OK |
| Example 4-32 | A-6 | 50 | B-6 | 50 | 53.8 | 1.8 | | OK |
| Example 4-33 | A-4 | 20 | B-6 | 80 | 50.6 | 0.9 | | OK |
| Example 4-34 | A-4 | 50 | B-6 | 50 | 60.2 | 1.6 | | OK |
| Comparative Example 4-35 | | 0 | B-9 | 100 | 105.0 | 0.0 | 130.7 | NG |
| Comparative Example 4-36 | A-3 | 5 | B-9 | 95 | 83.3 | 1.1 | | NG |

(continued)

| | Conjugated diene-modified polypropylene resin (A) | | Polypropylene resin (B) | | Resin composition | | | Burr evaluation |
|---|---|---|---|---|---|---|---|---|
| | Number | Parts | Number | Parts | MFR 230°C 2.16 kgf | MT 200°C 10 m/min | Crystallization temperature | Clearance 0.02 mm |
| | | Parts by weight | | Parts by weight | g/10 min | gf | °C | |
| Comparative Example 4-37 | A-6 | 5 | B-9 | 95 | 88.4 | 0.8 | | NG |
| Comparative Example 4-40 | A-4 | 5 | B-9 | 95 | 90.1 | 0.8 | | NG |
| Comparative Example 4-41 | A-4 | 10 | B-9 | 90 | 89.8 | 1.2 | | NG |
| Comparative Example 4-42 | A-5 | 10 | B-9 | 90 | 98.0 | 0.6 | | NG |
| Comparative Example 4-43 | A-5 | 20 | B-9 | 80 | 106.5 | 0.8 | 129.0 | NG |
| Comparative Example 4-44 | | 0 | B-10 | 100 | 52.1 | 0.0 | 113.2 | NG |
| Example 4-45 | A-3 | 20 | B-10 | 80 | 43.3 | 1.3 | 126.7 | OK |
| Example 4-46 | A-6 | 20 | B-10 | 80 | 54.7 | 0.8 | 126.3 | OK |
| Example 4-47 | A-4 | 20 | B-10 | 80 | 57.1 | 0.7 | 126.3 | OK |
| Comparative Example 4-48 | | 0 | B-11 | 100 | 32.7 | 0.0 | 112.2 | NG |
| Example 4-49 | A-3 | 20 | B-11 | 80 | 24.2 | 1.9 | 128.9 | OK |
| Example 4-50 | A-6 | 20 | B-11 | 80 | 32.9 | 1.2 | 126.7 | OK |
| Example 4-51 | A-4 | 20 | B-11 | 80 | 33.7 | 1.0 | 126.5 | OK |

Temperature conditions for injection molding: nozzle tip 180°C, mold 40°C

In the case of using the component (B) having an MFR value of less than 7 of the resin alone as in the resin (B-8), it is understood that satisfactory molding cannot be achieved from Comparative Examples 4-1 to 4-9 under the present molding condition even if the component (A) is added. Therefore, in the present invention, it is not preferable to use the component (B) having an MFR value of less than 7 of the resin alone.

As can be seen from Examples 4-11 to 4-22; Examples 4-25 to 4-34; Examples 4-45 to 4-47; and Examples 4-49 to 4-51, when a conjugated diene-modified polypropylene resin (A) having an MFR in the range of 1 to 150 and a polypropylene resin (B) having an MFR in the range of 7 to 100 are blended so that the MFR of the resin composition is in the range of 10 to 80 g/10 min and the MT was in the range of 0.7 to 30 gf, it was recognized that a remarkable effect of suppressing burrs was exhibited in the burr evaluation at a clearance of 0.02 mm. Also, such effect was observed as in Examples 4-14 and 4-18, even when only 3 parts by weight of component (A) was added.

From Comparative Example 4-23, it can be understood that a sufficient effect of suppressing burrs cannot be achieved when the MT of the resin composition is less than 0.7 gf even if the requirements of respective MFR values of the component (A), the component (B), and the resin composition are satisfied. From Comparative Examples 4-36 to 4-43, even if the requirements for MFR values of the component (A) and component (B) are satisfied, it is understood that a sufficient effect of suppressing burrs cannot be achieved if the MFR of the resin composition exceeds 80 g/10 min.

Furthermore, as can be seen by comparing Examples 4-45 to 4-47 and Comparative Example 4-44, it was confirmed that when 20 parts by weight of the component (A) is added to the component (B) whose crystallization temperature (Tc) of the resin itself is generally 113°C, the Tc value of the resin composition becomes 126 to 127°C. That is, it was recognized that the addition of the component (A) increased the crystallization rate during cooling. The same can be understood from comparison between Examples 4-49 to 4-51 and Comparative Example 4-48. The effect of promoting crystallization by addition of such a conjugated diene-modified polypropylene resin (A) has not been known hitherto and has been found independently by the present inventors.

(Comparative Examples 5-1 to 5-16)

<Production of Molded Body Added with Foaming Agent>

Using the type and composition ratio of the resins shown in Table 7, a conjugated diene-modified polypropylene resin (A), a polypropylene resin (B), and a color masterbatch as a colorant [Dye color: PP-M77255, Black, manufactured by Dainichiseika Color & Chemicals Mfg. Co., Ltd., 3 parts by weight (relative to 100 parts by weight of the total of (A) and (B))] were dry-blended. The resulting pellet mixture was fed from a hopper to a 32 mmφ twin-screw extruder (L/D=25) at 9 kg/hour and melt-kneaded at a cylinder temperature of 200°C to obtain pellets of the composition. Three parts by weight of a chemical foaming agent (POLYTHLENE EE 65 C, manufactured by Eiwa Chemical Ind. Co., Ltd.) was dry-blended with 100 parts by weight of the pellets obtained as described above, and injection molded bodies were produced under the same temperature conditions as in Table 6 and the degree of burr formation was evaluated in accordance with the items of the above-described burr evaluation, provided that the clearance was 0.02 mm.

[Table 7]

| | Conjugated diene-modified polypropylene resin (A) | | Polypropylene resin(B) | | Burr evaluation |
|---|---|---|---|---|---|
| | Number | Parts | Number | Parts | Clearance 0.02 mm |
| | | Parts by weight | | Parts by weight | |
| Comparative Example 5-1 | | 0 | B-4 | 100 | NG |
| Comparative Example 5-2 | A-6 | 20 | B-4 | 80 | NG |
| Comparative Example 5-3 | A-4 | 20 | B-4 | 80 | NG |
| Comparative Example 5-4 | | 0 | B-6 | 100 | NG |
| Comparative Example 5-5 | A-3 | 20 | B-6 | 80 | NG |
| Comparative Example 5-6 | A-6 | 3 | B-6 | 97 | NG |

(continued)

| | Conjugated diene-modified polypropylene resin (A) | | Polypropylene resin(B) | | Burr evaluation |
|---|---|---|---|---|---|
| | Number | Parts | Number | Parts | Clearance 0.02 mm |
| | | Parts by weight | | Parts by weight | |
| Comparative Example 5-7 | A-6 | 5 | B-6 | 95 | NG |
| Comparative Example 5-8 | A-6 | 10 | B-6 | 90 | NG |
| Comparative Example 5-9 | A-6 | 20 | B-6 | 80 | NG |
| Comparative Example 5-10 | A-4 | 20 | B-6 | 80 | NG |
| Comparative Example 5-11 | | 0 | B-9 | 100 | NG |
| Comparative Example 5-12 | A-5 | 20 | B-9 | 80 | NG |
| Comparative Example 5-13 | | 0 | B-10 | 100 | NG |
| Comparative Example 5-14 | A-3 | 20 | B-10 | 80 | NG |
| Comparative Example 5-15 | A-6 | 20 | B-10 | 80 | NG |
| Comparative Example 5-16 | A-4 | 20 | B-10 | 80 | NG |

Temperature conditions for injection molding: nozzle tip 180°C, mold 40°C

As can be seen from Comparative Examples 5-1 to 5-16, in each of comparative examples in which a foaming agent was added, an effect of suppressing burrs was not recognized in the burr evaluation at a clearance of 0.02 mm. In particular, in Comparative Examples 5-2, 5-3, 5-5 to 5-10, and 5-14 to 5-16, the composition itself of each of the resin compositions is the same as the composition of the resin composition in each example. These comparative examples are not directed to injection molded bodies that are not added with a foaming agent, but they are different from examples in that a foaming agent was added. From this, even if each requirement of the resin composition in the present application is satisfied, the effect of suppressing burrs is not exhibited when a foaming agent is added, and it is understood that the effect of suppressing burrs according to the present invention can be exerted only in an injection molded body to which no foaming agent is added.

(Examples 6-1 to 6-6)

<Production of Injection Molded Body>

Using the type and composition ratio of the resins shown in Table 8, a conjugated diene-modified polypropylene resin (A), a polypropylene resin (B), and a color masterbatch as a colorant [Dye color: PP-M77255, Black, manufactured by Dainichiseika Color & Chemicals Mfg. Co., Ltd., 3 parts by weight (relative to 100 parts by weight of the total of (A) and (B))] were dry-blended. The resulting dry-blended pellet mixture was fed from a hopper to a 32 mmφ twin-screw extruder (L/D=25) at 9 kg/hour and melt-kneaded at a cylinder temperature of 200°C to obtain pellets of the composition. Injection molded bodies were produced under the same temperature conditions as in Table 8, and the degree of burr formation was evaluated in accordance with the items of the above-described burr evaluation, provided that the clearance was 0.03 mm. The obtained results are shown in Table 8.

In addition, the composition pellets were subjected to a measurement of physical properties including melt flow rate (MFR) and melt tension (MT).

[Table 8]

| | Conjugated diene-modified polypropylene resin (A) | | Polypropylene resin (B) | | Resin composition | | Burr length |
|---|---|---|---|---|---|---|---|
| | Number | Parts | Number | Parts | MFR 230°C 2.16 kgf | MT 200°C 10 m/min | Clearance 0.03 mm |
| | | Parts by weight | | Parts by weight | g/10 min | gf | |
| Example 6-1 | A-3 | 10 | B-4 | 90 | 26.4 | 1.1 | 0.3 |
| Example 6-2 | A-6 | 5 | B-4 | 95 | 28.8 | 1.5 | 0.3 |
| Example 6-3 | A-3 | 3 | B-6 | 97 | 42.7 | 1.1 | 0.3 |
| Example 6-4 | A-6 | 3 | B-6 | 97 | 47.0 | 0.9 | 0.3 |
| Example 6-5 | A-5 | 20 | B-6 | 80 | 57.5 | 1.3 | 0.3 |
| Example 6-6 | A-3 | 10 | B-9 | 90 | 71.1 | 1.7 | 0.2 |

Temperature conditions for injection molding: nozzle tip 180°C, mold 40°C

From Examples 6-1 to 6-3, an effect of suppressing burrs was observed by the burr evaluation at the clearance of 0.03 mm when a conjugated diene-modified polypropylene resin (A) having an MFR in the range of 1 to 150 and a polypropylene resin (B) having an MFR in the range of 7 to 100 were blended so that the MFR of the resin composition was in the range of 10 to 80 g/10 min and the MT was in the range of 0.7 to 30 gf. Particularly, in Example 6-6 in which the MFR of the resin composition was in the range of 60 to 80 g/10 min, it was found that the burr length was shorter than in other examples and an effect of suppressing burrs was excellent.

**Claims**

1. An injection molded body of a polypropylene resin composition, which contains a conjugated diene-modified polypropylene resin (A) that has a melt flow rate of 1-150 g/10 min as measured at 230°C under a load of 2.16 kg and a polypropylene resin (B) that has a melt flow rate of 7-100 g/10 min as measured at 230°C under a load of 2.16 kg, wherein a content of the conjugated diene-modified polypropylene resin (A) is 0.1-50 parts by weight and a content of the polypropylene resin (B) is 99.9-50 parts by weight, relative to 100 parts by weight of a total of the conjugated diene-modified polypropylene resin (A) and the polypropylene resin (B), and the polypropylene resin composition has a melt flow rate of 10-80 g/10 min as measured at 230°C under a load of 2.16 kg, while having a melt tension of 0.7-30 gf as measured at 200°C at 10 m/min.

2. The injection molded body according to claim 1, wherein the melt flow rate of the conjugated diene-modified polypropylene resin (A) is 10-100 g/10 min.

3. The injection molded body according to claim 1 or 2, wherein the content of the conjugated diene-modified polypropylene resin (A) is 1-35 parts by weight and the content of the polypropylene resin (B) is 99-65 parts by weight, relative to 100 parts by weight of the total of the conjugated diene-modified polypropylene resin (A) and the polypropylene resin (B).

4. The injection molded body according to any one of claims 1 to 3, wherein the conjugated diene-modified polypropylene resin (A) is a molten mixture of (a) a polypropylene resin, (b) a radical polymerization initiator, and (c) a conjugated diene compound.

5. A method for producing the injection molded body according to any one of claims 1 to 4, comprising a step of injection molding the polypropylene resin composition at a temperature of 170-300°C.

**EP 3 395 883 A1**

## INTERNATIONAL SEARCH REPORT

| | International application No. |
|---|---|
| | PCT/JP2016/088517 |

A. CLASSIFICATION OF SUBJECT MATTER
*C08L23/10(2006.01)i, C08L23/14(2006.01)i*

According to International Patent Classification (IPC) or to both national classification and IPC

B. FIELDS SEARCHED

Minimum documentation searched (classification system followed by classification symbols)
C08L23/10, C08L23/14

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho    1971–2017   Toroku Jitsuyo Shinan Koho   1994–2017

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | WO 2011/046103 A1 (Kaneka Corp.), 21 April 2011 (21.04.2011), claims; examples & US 2012/0264886 A1 claims; examples & EP 2489686 A1        & CN 102574948 A & KR 10-2012-0088653 A | 1-5 |
| X | JP 2011-110911 A (Kaneka Corp.), 09 June 2011 (09.06.2011), claims; examples (Family: none) | 1-5 |
| X | JP 2012-166522 A (Kaneka Corp.), 06 September 2012 (06.09.2012), claims; examples (Family: none) | 1-5 |

☒ Further documents are listed in the continuation of Box C.          ☐ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search 09 February 2017 (09.02.17) | Date of mailing of the international search report 21 February 2017 (21.02.17) |
|---|---|
| Name and mailing address of the ISA/ Japan Patent Office 3-4-3,Kasumigaseki,Chiyoda-ku, Tokyo 100-8915,Japan | Authorized officer Telephone No. |

Form PCT/ISA/210 (second sheet) (January 2015)

29

**INTERNATIONAL SEARCH REPORT**

International application No.

PCT/JP2016/088517

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2012-107097 A (Kaneka Corp.), 07 June 2012 (07.06.2012), claims; examples (Family: none) | 1-5 |
| A | JP 2011-94068 A (Kaneka Corp.), 12 May 2011 (12.05.2011), claims; examples (Family: none) | 1-5 |
| A | JP 7-179687 A (Mitsui Toatsu Chemicals, Inc.), 18 July 1995 (18.07.1995), claims; examples (Family: none) | 1-5 |
| A | JP 7-133387 A (Mitsui Toatsu Chemicals, Inc.), 23 May 1995 (23.05.1995), claims; examples (Family: none) | 1-5 |

Form PCT/ISA/210 (continuation of second sheet) (January 2015)

**EP 3 395 883 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005194297 A
- JP 2011088955 A